(19) Europäisches Patentamt
European Patent Office
Office européen des brevets

(11) **EP 3 762 598 B1**

(12) **EUROPEAN PATENT SPECIFICATION**

(45) Date of publication and mention
of the grant of the patent:
**09.10.2024 Bulletin 2024/41**

(21) Application number: **19716552.5**

(22) Date of filing: **08.03.2019**

(51) International Patent Classification (IPC):
**F02D 41/14** *(2006.01)*

(52) Cooperative Patent Classification (CPC):
**F02D 41/1454; F02D 41/1474; F02D 41/1491;**
F01N 3/101; F02D 19/029; F02D 41/0027;
F02D 41/1408; F02D 41/2441; F02D 41/2454;
F02D 41/2487; F02D 2200/0612; Y02A 50/20;
Y02T 10/12

(86) International application number:
**PCT/IB2019/051901**

(87) International publication number:
**WO 2019/171343 (12.09.2019 Gazette 2019/37)**

(54) **METHOD FOR MANAGING A FUEL SUPPLY OF A SPARK IGNITION INTERNAL COMBUSTION ENGINE AND A SUPPLY SYSTEM IMPLEMENTING SAID METHOD**

VERFAHREN ZUR VERWALTUNG EINER BRENNSTOFFZUFUHR EINER FREMDGEZÜNDETEN BRENNKRAFTMASCHINE UND ZUFUHRSYSTEM ZUR DURCHFÜHRUNG DES BESAGTEN VERFAHRENS

PROCÉDÉ DE GESTION D'UNE ALIMENTATION EN CARBURANT D'UN MOTEUR À COMBUSTION INTERNE À ALLUMAGE PAR ÉTINCELLE ET SYSTÈME D'ALIMENTATION METTANT EN OEUVRE LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2018 IT 201800003377**

(43) Date of publication of application:
**13.01.2021 Bulletin 2021/02**

(73) Proprietor: **FPT Industrial S.p.A.**
**10156 Torino (IT)**

(72) Inventors:
• **CARO, Marcello**
**10156 Torino (IT)**
• **AIMAR, Bruno**
**12040 Margarita (CN) (IT)**
• **BRUCATO, Aldo**
**10156 Torino (IT)**

(74) Representative: **Studio Torta S.p.A. et al**
**Via Viotti, 9**
**10121 Torino (IT)**

(56) References cited:
EP-A2- 0 265 079     EP-A2- 0 358 062
WO-A1-2006/129198     US-A- 4 655 188
US-A- 4 669 439     US-A- 4 703 430
US-A- 4 961 412     US-A- 5 467 755
US-A1- 2017 009 680

## Description

Related applications This application claims priority from Italian Patent Application No. 102018000003377 filed on 08/03/2018.

Technical field of the invention

The invention relates to the field of methods and systems for managing a supply of a spark ignition engine.

State of the art

In spark ignition engines, also known as Otto engines, the respect of the stoichiometric ratio is crucial in order to observe the limits set by laws on polluting emissions.

This is also important when trying to ensure uniform performances in terms of torque delivery, regardless of unpredictable changes in the quality of the fuel used.

This problem is particularly urgent in the field of engines supplied with gas, for example natural gas, commonly known as methane, which can be stored in the tanks in a gaseous form (CNG) or in a liquid form (LNG).

Gaseous or liquid fuels have a strong composition variability, which often makes it hard or even impossible to obtain, especially in a short time, a correct stoichiometry of the combustion.

Drivers simply need to change filling station in order to find fuels that are very different from one another and, hence, require a different metering during the relative injection into the cylinders of the internal combustion engine.

The quantity of fuel to be injected depends on the mass of fresh air introduced into the engine, which is measures by means of a dedicated sensor arranged on the intake manifold.

The fuel supply of the internal combustion engine can be operated by means of a closed loop control, which uses a linear lambda sensor as a feedback signal in order to obtain a correct air/fuel ratio (A/F).

Linear lambda sensors are precise and fast, allow the supply of the internal combustion engine to be properly corrected and ensure the stoichiometry of the combustion. However, linear lambda sensors are technically complicated and, therefore, expensive. Furthermore, they require a dedicated software for the conditioning of the relative generated signal.

Binary lambda sensors, commonly known as ON/OFF sensors, are also known. They do not need a dedicated sensor and their implementation definitely is cheaper.

These ON/OFF sensors also require a closed loop control scheme, forcing the air/fuel ratio (A/F) to oscillate around the stoichiometric value, thus obtaining - as feedback - the switching of the signal generated by the binary sensor. This A/F forcing operation modulates the supply of fuel, increasing or decreasing the quantity of fuel injected, so as to alternatively cause the combustion i taking place in the cylinder to lack oxygen or have excess oxygen.

This forcing operation can be a multiplying non-dimensional correction of the reference signal controlling the mass of fuel to be injected. If its value is 1, there basically is no correction, whereas, if its value is more than 1 or less than 1, there is a correction of the mass of fuel to be injected relative to a reference value, in order to reach a reference air/fuel ratio.

Therefore, the three-way catalyst is forced to work on a stoichiometric condition, in a bi-stable situation, namely continuously oscillating between an oxidizing operation and a reducing operation.

Examples of this concept can be found in US2008319634 and WO2010097267.

The closed loop control is carried out by means of a PI (proportional and integral) controller, which corrects the supply of the internal combustion engine based on the switchings performed by the binary lambda sensor upstream of the three-way catalyst.

US4655188 shows a feedback control, in which alpha is a feedback correction control in the formula

$$Ti = Tp \times COEF \times a + Ts \text{ and } Tp = K \times Q/N$$

wherein Tp is a "base" fuel injection signal and Ts is a correction of the electric signal due to other factors. Alpha is the median of a plurality of alpha_zero correction values close to the switchings of the binary sensor.

Summary of the invention

The object of the invention is to provide a method for managing a fuel supply of a spark ignition engine, which is capable of better adjusting to the variability of the fuel composition using a binary lambda sensor.

The idea on which the invention is based is that of sampling the air/fuel ratio measured in at least two consecutive switchings of the binary sensor and of calculating an average value. The closed loop control is forced to cause the air/fuel ratio to converge towards said average value.

Therefore, according to the invention, the air/fuel ratios are sampled in two consecutive switchings, which corresponds to sampling the control signals of the injectors, which has nothing in common with the sampling of the feedback variable.

In other words, whereas in the invention the control is based on the air/fuel ratios, in US4655188 the control is based on the feedback variable. In addition, the invention is independent of the implementation of a feedback control on of the possible features thereof.

Indeed, no variable measured on the exhaust line is acquired, but only the switching instants of the binary sensor are acquired. As a consequence, the control according to the invention, despite being capable of being combined with a traditional feedback control, can actually be compared with an open loop control.

If the air mass flowing into the engine is decided by the driver, then the control manages the supply of fuel based on the air flowing into the engine. If, on the other hand, the throttle valve is motor-driven, then the control can also manage the opening of the throttle valves, besides the injection of fuel.

When dealing with a control carried out by means of a processing unit and of electric injectors, the quantity of fuel clearly corresponds to an electric control signal of the injectors.

The (electric) control signal of the injectors injecting fuel into the cylinders depends on the stoichiometry value towards which the control converges.

Therefore, this average value, hereinafter referred to as "learned stoichiometry", alters the average quantity of fuel to be injected in a predetermined operating condition of the engine.

The more the composition of the fuel changes relative to an ideal composition, the higher the aforesaid alteration of the mass of fuel to be injected is relative to an ideal condition.

In other words, the reference quantity of fuel to be injected is pre-calculated in ideal conditions and, therefore, is referred to as "nominal stoichiometry".

When the closed loop control involves the use of a multiplying coefficient, referred to as A/F forcing factor, to correct the air/fuel ratio, the method can alternatively comprise the sampling of said multiplying coefficient during said two switchings of the binary sensor and the subsequent calculation of the relative average value of the multiplying coefficient.

The fact of sampling the air/fuel ratios during the switchings of the binary sensor is independent of the type of open loop control adopted.

When the engine point remains stationary for a predetermined amount of time, said "learned stoichiometry" is preferably calculated as the mobile average of a plurality of consecutive switchings, preferably an even number of consecutive switchings. An even number of switchings leads to an advantageous effect, which allows the learning strategy to be simplified. Indeed, in this way, possible delays between the calculation of the A/F forcing factor and the moment of the rich/lean switching of the sensor itself are cancelled out. These delays affect both the rich state, thus causing an overestimation of the air/fuel ratio, and the lean state, thus causing an underestimation of the air/fuel ratio. An even number of samples causes the two delays, leading to an overestimation and to an underestimation of the air/fuel ratio, to compensate one another.

According to a first aspect of the invention, said "learned stoichiometry" is calculated in an operating point of the engine and reflects on the entire operating interval of the internal combustion engine.

For example, a change in the air/fuel ratio can be calculated relative to a reference value of the calculation engine point and the change can be applied to the entire operating interval of the engine or, if the system is working in terms of A/D forcing factor, the entire operating interval of the engine can be subjected to an intervention in terms of A/F forcing factor.

This advantageously leads to a quick adjustment of the injection times of the engine to the changes in the chemical composition of the fuel, so that the internal combustion engine can perfectly work astride a stoichiometric combustion.

The adjustment is preferably operated as soon as a filling of the tank with gaseous or liquid CNG or LNG fuel is detected.

According to a preferred variant of the invention, a 2D map is stored in a memory allocation of the processing unit controlling the fuel supply of the internal combustion engine. This 2D map expresses a reference air/fuel ratio or a correction thereof as a function of the "engine point", namely of the revolutions/minute of the drive shaft and of the delivered torque.

Therefore, the 2D map is provided with a plurality of cells. Similarly, said 2D map can store a central value of said A/F forcing factor, around which it oscillates, in order to determine the oscillation of the air/fuel ratio. Advantageously, when a refuelling procedure is detected, the fuel is renewed with a homogeneous chemical composition and the procedure described above is carried out, thus changing the air/fuel ratio or the central value of the A/F forcing factor in the entire operating field of the internal combustion engine, hence in all the cells making up said 2D map.

According to a preferred variant of the invention, a second correction process is carried out in each engine point, for example in each cell of the aforesaid 2D map, when the engine operates in stationary conditions for a predetermined amount of time. This correction is not applied to all the cells of the 2D map in an indiscriminate manner, but only to the cell corresponding to the engine point in which the process to calculate the aforesaid average value was carried out, and, if necessary, is extended to the cells adjacent to said cell, by means of decreasing weighing factor.

Therefore, whereas the first process preferably takes lace after a refuelling operation and affects the entire map, the second process takes place when the first process has ended and affects the sole cell corresponding to the relative engine point or, at the most, the cells nearby. The claims describe preferred embodiments of the invention, thus forming an integral part of the description.

Brief description of the figures

Further objects and advantages of the invention will be best understood upon perusal of the following detailed description of an embodiment thereof (and of relative variants) with reference to the accompanying drawings merely showing non-limiting examples, wherein:

figure 1 schematically shows a spark ignition internal combustion engine provided with relative supply means and with an exhaust line, on which there are arranged a three-way catalyst and a binary lambda sensor according to the invention;

figure 2 shows a time diagram of the switchings due to the implementation of a binary lambda sensor and of the method according to the invention;

figure 3 shows a 2D map where reference values are stored, which relate to injection times or to the mass of fuel to be injected in each combustion cycle of a cylinder;

figure 4 shows the 2D map of figure 3 displaying a calculation cell and relative adjacent cells;

figures 5, 5a and 5b respectively show a flowchart explaining the control method according to the invention, declined in the two variants of figures 5a and 5b, wherein the variant of figure 5a is preferably carried out when a refuelling procedure is detected, whereas the variant of figure 5b is carried out when the variant of figure 5a is deactivated.

In the figures, the same numbers and the same reference letters indicate the same elements or components.

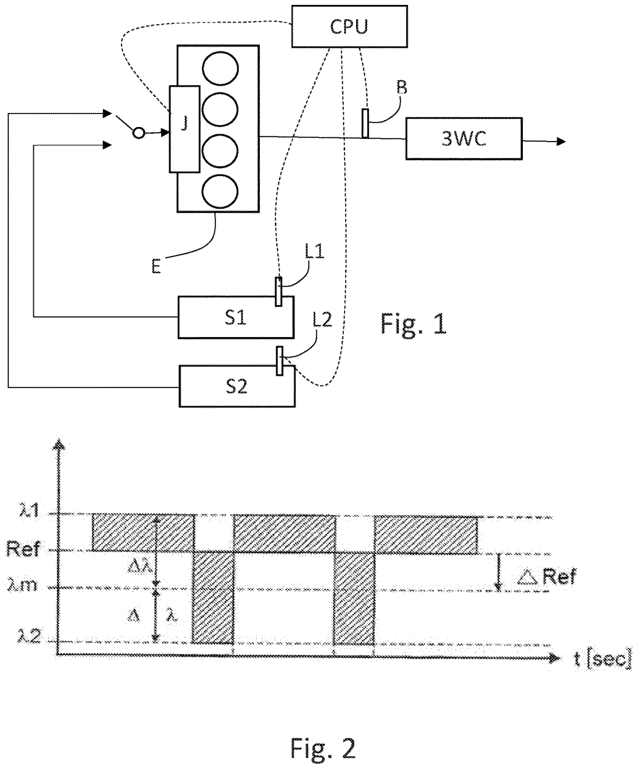

The blocks of figure 2 represented with a broken line are to be considered as optional.

The broken-line connections of figure 1 represent analogue or digital electric lines.

For the purposes of the invention, the term "second" component does not imply the presence of a "first" component. As a matter of fact, these terms are only used for greater clarity and should not be interpreted in a limiting manner.

Detailed description of embodiments

Figure 1 schematically shows a spark ignition internal combustion engine E provided with supply means J, for example fuel injectors.

The engine E is provided with an exhaust line, on which which a three-way catalyst 3WC is housed. Upstream of the catalyst there is, along the exhaust line, a binary lambda sensor B, which is adapted to switch between two logical conditions indicating a lean and a rich combustion, respectively.

A processing unit CPU monitors the control of the internal combustion engine E and, in particular, controls the injection of fuel into the cylinders of the engine by means of relative injectors J.

Said processing unit implements a closed loop control over said binary lambda sensor B, causing the supply of the internal combustion engine to continuously oscillate around the stoichiometric air/fuel ratio (A/F).

The processing unit, when a switching of the level of signal generated by the lambda sensor is detected, reverses the sign of the correction by means of the aforesaid "A/F forcing factor", until it detects a new switching of the level of signal generated by the sensor. The forcing factor, if expressed as a multiplying coefficient, oscillates relative to a central value, which, in ideal conditions, is 1. Therefore, 1.01 and 0.99 determine a rich condition or a lean condition of the air/fuel ratio.

In the processing unit there is stored a reference value of the fuel to be injected into the internal combustion engine.

The supply managing method according to the invention comprises a proportional/integral closed loop control over a binary signal (ON/OFF) generated by the binary lambda sensor, the method comprising a procedure for continuously changing an air/fuel ratio between a lean combustion condition and a rich combustion condition and vice versa, when a switching of said binary signal is detected, the method comprising a procedure carried out in stationary operating conditions of the internal combustion engine and consisting of:

- a first step of registering at least two values of said air/fuel ratio $\lambda 1$ and $\lambda 2$ for as many consecutive switchings,
- a second step of calculating an average value $\lambda m$ of said two registered values,
- a third step of setting said calculated average value as a reference value Ref of the air/fuel ratio.

This setting can evidently be gradual, thus determining a convergence, when the method is carried out repeatedly for some processing cycles.

In other words, the result is a zero value or, in case of a correction carried out by means of a multiplying coefficient, to a neutral value, i.e. equal to 1.

The fact of setting said average value as reference value corresponds to calculating a variation D_Ref = $\lambda m$ - Ref.

Figure 2 shows a diagram of a supply signal of the internal combustion engine over time. The closed loop control, which is based on the binary signal generated by the binary lambda sensor, determines oscillations around a reference value Ref, which was previously stored in the processing unit.

In the case of figure 2, the reference value of the supply signal is greater than the stoichiometric value $\lambda m$ for the currently implemented fuel composition.

In the example, the switchings of the binary lambda sensor take place in $\lambda 1$ and $\lambda 2$, which are equally spaced apart from $\lambda m$. Therefore, there is a difference between the previously stored A/F ratio Ref and the current one, which takes into account the actual composition of the fuel. When the engine remains in stationary conditions for a long time, these circumstances can be exploited by calculating a mobile average between the air/fuel ratios of the ON/OFF switchings of the sensor.

The processing unit preferably implements a closed loop control scheme with a proportional and integrative controller PI on the feedback branch, as suggested by the prior art documents for spark ignition Otto engines. This scheme, though, is changed as described above.

The reference value Ref changes upon variation of the engine point and is an ideal value, since it depends on an ideal fuel.

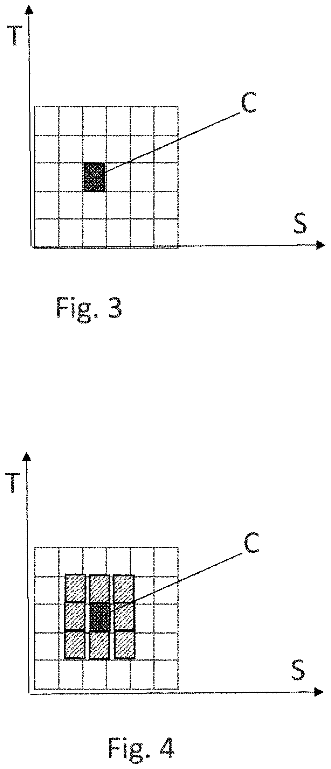

Figure 3 shows an example of a 2D map.

A sensor L1 is capable of detecting a refuelling operation of the tank S1 and a sensor L2 is capable of detecting a refuelling operation of the tank S2 with a gaseous fuel, which supplies the internal combustion engine. Said sensor can detect a sudden pressure increase in the tank of the fuel gas or it can detect the increase of the level sensor of the tank containing the liquid phase fuel.

When, after having detected said refuelling operation, said first procedure is carried out monitoring the engine point and when the latter is deemed to be stable, said correction of the A/F ratio of the internal combustion engine is performed.

The correction is preferably applied to the same extent to all the reference values of the operating dominion of the engine and, therefore, to the entire 2D map described above, when said procedure is triggered by a refuelling procedure, thus defining a so-called "first process". According to a preferred variant of the invention, after having ended the first procedure triggered by the refuelling procedure, a second procedure starts, which is preferably carried out in a constant manner until a subsequent refuelling operation.

According to a preferred variant of the invention, which can be combined with the previous one, a "second process" is provided, which is carried out when said first process has ended and involves a similar correction of the reference values Ref, cell by cell.

In other words, the correction, unlike what happens in the first process, is not applied to the entire map, but is applied to the sole cell C in which the engine operates and only optionally to near cells. Said cell C is dark in figure 3. Figure 4, on the other hand, shows the cells adjacent to the cell C.

This is a "punctual correction", which is opposed to the "global correction" performed on the entire map.

Depending on the adopted solution, namely on the degree of division of the operating field of the engine, a more or less thick map can be obtained, i.e. a map with cells with a smaller size.

In case of a very thick map, the method can comprise making corrections in the immediately surrounding cells, which define a first level, and in further cells immediately adjacent to the cells of the first level. These further cells define a second level, etc..

In this case, again, the correction is preferably weighed, i.e. proportionally decreased, when gradually moving away from the cell corresponding to the current engine point. This is a "zone" correction scheme and is slower than the "global correction".

According to a further preferred variant of the invention, the processing unit controlling the internal combustion engine comprises a second 2D map implemented for managing the supply of the internal combustion engine when the latter is supplied by a second tank S2 filled with a fuel that is different from the one of the previous tank S1. Therefore, when the supply is switched between two different fuel sources, a relative 2D map is implemented so as to to avoid excessively long convergence times of the first process, at first, and, then, of the second process. Hence, the vehicle can implement an LNG liquid methane tank and also a CNG gaseous methane tank (so-called "dual fuel" systems).

In other words, when the supply is switched from CNG to LNG and vice versa, the processing unit starts working on the corresponding 2D map.

This variant can be extended based on the number of tanks installed in the vehicle. In other words, for each tank being used there can be a 2D learning map.

This invention can be advantageously implemented by means of a computer program comprising encoding means for carrying out one or more steps of the method, when the program is run on a computer. Therefore, the scope of protection is extended to said computer program and, furthermore, to means that can be read by a computer and comprise a recorded message, said means that can be read by a computer comprising program encoding means for carrying out one or more steps of the method, when the program is run on a computer.

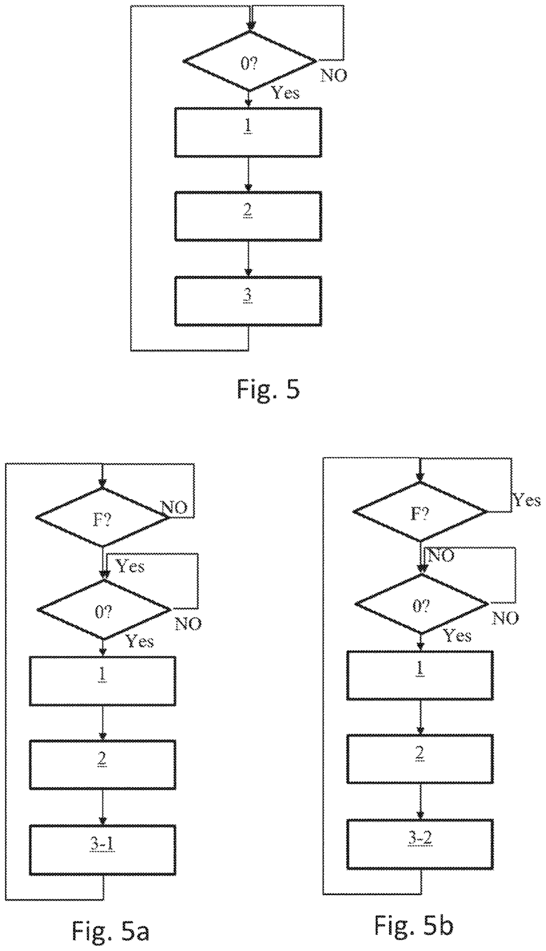

Figure 5 shows a step 0, during which the engine is in stationary conditions, which means that the number of revolutions and the delivered torque are constant for a predetermined amount of time.

Subsequently, the above-mentioned steps 1 - 3 are carried out and the process starts again from the beginning.

In case of implementation of the first process, which is shown in figure 5a, a refuelling procedure has just been preliminarily performed by means of the step F.

The method can be carried out only once o can be carried out for a predetermined number of times by means of an inner loop with a counter, which joins the input of step 3-1 to the input of step 0.

Step 3-1 specifically involves changing the reference value of the air/fuel ratio in the entire operating dominion of the engine.

On the contrary, step 3-2 of figure 5b, which represents the second process, only involves changing the reference value of the air/fuel ratio of the cell C where the engine operates in the stationary conditions while the second procedure is carried out.

Figure 5b shows the Yes/No outputs of step F reversed relative to one another, as it is carried out when the first process is not being performed or has ended.

**Claims**

1. A method for managing a supply of a spark ignition internal combustion engine (E), the engine (E) being provided with

+ a fuel supply system (J) adapted to meter fuel in response to supply signals,

+ a three-way catalyst (3WC) connected to an outlet manifold of the internal combustion engine,

+ a binary lambda sensor (B), adapted to switch between two operative conditions respectively indicating lean and rich burn, said sensor being arranged immediately upstream of said catalyst (3WC),

the method comprising a procedure of commanding said supply system on the basis of a switching between said operative conditions, so that said combustion oscillates over a stoichiometric combustion condition, and so that an air/fuel ratio oscillates around a reference value (Ref) stored in a processing unit,

the method comprising a first procedure carried out in stationary operating conditions of the internal combustion engine formed by,

- a first step of registering two values ($\lambda 1$, $\lambda 2$) of an air/fuel ratio for as many consecutive switchings between said operative conditions by means of sampling the supply signals,

- a second step of calculating an average value (Am) of said two registered values,

- a third step of setting said calculated average value as the reference value (Ref) of the air/fuel ratio.

2. The method according to claim 1, wherein said average value is calculated by means of a mobile average over a plurality of consecutive switchings.

3. The method according to any one of the preceding claims 1 or 2, wherein said procedure is activated when a procedure of supplying a tank (S) supplying said supply system (J) is detected.

4. The method according to claim 3, wherein a difference (Ref - Am) between said reference value (Ref) and said average value ($\lambda m$) is called (Delta_lambda) error, before carrying out said third step, and wherein said reference value is mapped on the entire operating dominion of the internal combustion engine, and wherein said third step includes correction of said reference value by means of said error for all the values of the reference value of said mapping.

5. The method according to claim 4, wherein said operating domain of the internal combustion engine is mapped in a 2D map and wherein said third step includes correction of said reference value by means of said error for all the values in the cells of said 2D map.

6. The method according to any one of the preceding claims, wherein said first procedure is carried out for a predetermined number of cycles and is then terminated.

7. The method according to any one of the preceding claims from 1 to 3, wherein said third step is carried out only for a reference value (Ref) corresponding to said stationary operating conditions of the internal combustion engine.

8. The method according to any one of the claims from 4 to 6, further comprising a second procedure comprising the aforementioned first, second and third steps, wherein said third step is carried out only for a reference value (Ref) corresponding to said stationary operating conditions of the internal combustion engine and wherein said second procedure is carried out when said first procedure has been terminated.

9. The method according to claim 8, wherein an operating dominion of the internal combustion engine is mapped in a 2D map and wherein, in each cell of said map a reference value of said air/fuel ratio is shown and wherein a difference (Ref - Am) between said reference value (Ref), before the execution of said third step, and said average value (Am) is called (Delta_lambda) error, and wherein said third step includes correction of said reference value of a first cell (C) of said 2D map, at said stationary operating conditions of the internal combustion engine.

10. The method according to claim 9, wherein a correction is carried out on the cells adjacent to said first cell by weighing said error by means of a coefficient P.

11. A system for managing a supply of an internal combustion engine provided with

+ a fuel supply system (J) adapted to meter fuel in response to supply signals,

+ a three-way catalyst (3WC) connected to an outlet manifold of the internal combustion engine,

+ a binary lambda sensor (B), adapted to switch between two logical conditions respectively indicating lean and rich burn, said sensor being arranged immediately upstream of said catalyst (3WC),

**characterized in that** said management system comprises a processing unit (ECU), configured to carry out all the steps of any one of the claims from 1 to 10.

12. A terrestrial vehicle provided with

+ an internal combustion engine (E) having a fuel supply system (J) adapted to meter fuel in response to supply signals,
+ a three-way catalyst (3WC) connected to an outlet manifold of the internal combustion engine,
+ a binary lambda sensor (B), adapted to switch between two logical conditions respectively indicating lean and rich burn, said sensor being arranged immediately upstream of said catalyst (3WC),
+ a management system for supplying said internal combustion engine according to claim 11.

13. The vehicle according to claim 12, further comprising a tank (S1, S2) of gaseous fuel, provided with a sensor (L1, L2) adapted to detect a procedure of supplying said tank with fuel.

14. A computer program comprising program encoding means adapted to cause the system of claim 11 to perform all the steps of any one of the claims from 1 to 10.

15. Computer-readable means comprising the computer program of claim 14.


**Patentansprüche**

1. Verfahren zum Managen einer Versorgung einer fremdgezündeten Brennkraftmaschine (E), wobei die Kraftmaschine (E) mit Folgendem versehen ist:

+ einem Kraftstoffzufuhrsystem (J), das ausgelegt ist, Kraftstoff in Reaktion auf Versorgungssignale zu dosieren,
+ einem Dreiwegekatalysator (3WC), der mit einem Auslasskrümmer der Brennkraftmaschine verbunden ist, und
+ einem Binärlambdasensor (B), der ausgelegt ist, zwischen zwei betriebstechnischen Zuständen, die magere bzw. fette Verbrennung angeben, umzuschalten, wobei der Sensor unmittelbar stromaufwärts des Katalysators (3WC) angeordnet ist, wobei

das Verfahren eine Prozedur zum Anweisen des Versorgungssystems auf der Grundlage eines Umschaltens zwischen den betriebstechnischen Zuständen umfasst, derart, dass die Verbrennung über einen stöchiometrischen Verbrennungszustand oszilliert, und derart, dass ein Luft/Kraftstoff-Verhältnis um einen Bezugswert (Ref), der in einer Verarbeitungseinheit gespeichert ist, oszilliert, und
das Verfahren eine erste Prozedur umfasst, die unter stationären Betriebsbedingungen der Brennkraftmaschine ausgeführt wird und gebildet ist durch:

- einen ersten Schritt des Registrierens von zwei Werten ($\lambda$1, $\lambda$2) eines Luft/Kraftstoff-Verhältnisses für entsprechend gleichviele aufeinanderfolgende Umschaltvorgänge zwischen den betriebstechnischen Zuständen mittels eines Abtastens der Versorgungssignale,
- einen zweiten Schritt des Berechnens eines Durchschnittswerts ($\lambda$m) der zwei registrierten Werte und
- einen dritten Schritt des Setzens des berechneten Durchschnittswerts als den Bezugswert (Ref) des Luft/Kraftstoff-Verhältnisses.

2. Verfahren nach Anspruch 1, wobei der Durchschnittswert mittels eines gleitenden Durchschnitts über mehre aufeinanderfolgende Umschaltvorgänge berechnet wird.

3. Verfahren nach einem der vorhergehenden Ansprüche 1 oder 2, wobei die Prozedur aktiviert wird, wenn eine Prozedur zum Versorgen eines Behälters (S), der das Versorgungssystem (J) versorgt, detektiert wird.

4. Verfahren nach Anspruch 3, wobei eine Differenz (Ref - $\lambda$m) zwischen dem Bezugswert (Ref) und dem Durchschnittswert ($\lambda$m) vor dem Ausführen des dritten Schritts als (Delta_lambda)-Fehler bezeichnet wird, der Bezugswert auf den gesamten Betriebsbereich der Brennkraftmaschine abgebildet wird und der dritte Schritt eine Korrektur des Bezugswerts mittels des Fehlers für alle Werte des Bezugswerts der Abbildung umfasst.

5. Verfahren nach Anspruch 4, wobei der Betriebsbereich der Brennkraftmaschine auf ein 2D-Kennfeld abgebildet wird und der dritte Schritt eine Korrektur des Bezugswerts mittels des Fehlers für alle Werte in den Zellen des 2D-Kennfelds umfasst.

6. Verfahren nach einem der vorhergehenden Ansprüche, wobei die erste Prozedur für eine vorgegebene Anzahl von Zyklen ausgeführt wird und dann beendet wird.

7. Verfahren nach einem der vorhergehenden Ansprüche 1 bis 3, wobei der dritte Schritt lediglich für einen Bezugswert (Ref) ausgeführt wird, der den stationären Betriebsbedingungen der Brennkraftmaschine entspricht.

8. Verfahren nach einem der Ansprüche 4 bis 6, das ferner eine zweite Prozedur umfasst, die die oben erwähnten ersten, zweiten und dritten Schritte umfasst, wobei der dritte Schritt lediglich für einen Bezugswert (Ref) ausgeführt wird, der den stationären Betriebsbedingungen der Brennkraftmaschine entspricht, und die zweite Prozedur ausgeführt wird, wenn die erste Prozedur abgeschlossen worden ist.

9. Verfahren nach Anspruch 8, wobei eine Betriebsherrschaft der Brennkraftmaschine auf ein 2D-Kennfeld abgebildet wird, in jeder Zelle des Kennfelds ein Bezugswert des Luft/Kraftstoff-Verhältnisses gezeigt ist, eine Differenz (Ref - λm) zwischen dem Bezugswert (Ref) vor der Ausführung des dritten Schritts und dem Durchschnittswert (λm) als (Delta_lambda)-Fehler bezeichnet wird und der dritte Schritt eine Korrektur des Bezugswerts einer ersten Zelle (C) des 2D-Kennfelds bei den stationären Betriebsbedingungen der Brennkraftmaschine umfasst.

10. Verfahren nach Anspruch 9, wobei eine Korrektur an den Zellen, die zur ersten Zelle benachbart sind, durch Gewichten des Fehlers mittels eines Koeffizienten P ausgeführt wird.

11. System zum Managen einer Versorgung einer Brennkraftmaschine, die mit Folgendem versehen ist:

+ einem Kraftstoffzufuhrsystem (J), das ausgelegt ist, Kraftstoff in Reaktion auf Versorgungssignale zu dosieren,
+ einem Dreiwegekatalysator (3WC), der mit einem Auslasskrümmer der Brennkraftmaschine verbunden ist, und
+ einem Binärlambdasensor (B), der ausgelegt ist, zwischen zwei logischen Zuständen, die magere bzw. fette Verbrennung angeben, umzuschalten, wobei der Sensor unmittelbar stromaufwärts des Katalysators (3WC) angeordnet ist,

dadurch gekennzeichnet, dass das Managementsystem eine Verarbeitungseinheit (ECU) umfasst, die konfiguriert ist, alle Schritte nach einem der Ansprüche 1 bis 10 auszuführen.

12. Terrestrisches Fahrzeug, das mit Folgendem versehen ist:

+ einer Brennkraftmaschine (E), die ein Kraftstoffzufuhrsystem (J) aufweist, das ausgelegt ist, Kraftstoff in Reaktion auf Versorgungssignale zu dosieren,
+ einem Dreiwegekatalysator (3WC), der mit einem Auslasskrümmer der Brennkraftmaschine verbunden ist,
+ einem Binärlambdasensor (B), der ausgelegt ist, zwischen zwei logischen Zuständen, die magere bzw. fette Verbrennung angeben, umzuschalten, wobei der Sensor unmittelbar stromaufwärts des Katalysators (3WC) angeordnet ist, und
+ einem Managementsystem zum Versorgen der Brennkraftmaschine nach Anspruch 11.

13. Fahrzeug nach Anspruch 12, das ferner einen Behälter (S1, S2) eines gasförmigen Kraftstoffs umfasst, der mit einem Sensor (L1, L2) versehen ist, der ausgelegt ist, eine Prozedur zum Versorgen des Behälters mit Kraftstoff zu detektieren.

14. Computerprogramm, das Programmcodierungsmittel umfasst, die ausgelegt sind, zu verursachen, dass das System nach Anspruch 11 alle Schritte nach einem der Ansprüche 1 bis 10 durchführt.

15. Computerlesbare Mittel, die das Computerprogramm nach Anspruch 14 umfassen.

**Revendications**

1. Méthode pour gérer une alimentation d'un moteur (E) à combustion interne à allumage par étincelle, le moteur (E) étant doté de

+ un système d'alimentation (J) en combustible adapté pour mesurer un combustible en réponse à des signaux d'alimentation,
+ un catalyseur (3WC) à trois voies relié à un collecteur de sortie du moteur à combustion interne,
+ un capteur lambda binaire (B), adapté pour permuter entre deux états de fonctionnement indiquant respectivement un mélange pauvre et riche, ledit capteur étant agencé immédiatement en amont dudit catalyseur (3WC),
la méthode comprenant une procédure de commande dudit système d'alimentation sur la base d'une permutation entre lesdits états de fonctionnement, de sorte que ladite combustion oscille dans un état de combustion stœchiométrique, et de sorte qu'un rapport air/combustible oscille autour d'une valeur de référence (Ref) stockée dans une unité de traitement,
la méthode comprenant une première procédure réalisée dans des états de fonctionnement stables du moteur à combustion interne constituée de,

- une première étape consistant à enregistrer deux valeurs ($\lambda1$, $\lambda2$) d'un rapport air/combustible pour autant de permutations consécutives entre lesdits états de fonctionnement au moyen d'un échantillonnage des signaux d'alimentation,
- une deuxième étape consistant à calculer une valeur moyenne (Xm) desdites deux valeurs enregistrées,
- une troisième étape consistant à régler ladite valeur moyenne calculée sur la valeur de référence (Ref) du rapport air/combustible.

**2.** Méthode selon la revendication 1, dans laquelle ladite valeur moyenne est calculée au moyen d'une moyenne mobile sur une pluralité de permutations consécutives.

**3.** Méthode selon l'une quelconque des revendications précédentes 1 ou 2, dans laquelle ladite procédure est activée lorsqu'une procédure d'alimentation d'un réservoir (S) alimentant ledit système d'alimentation (J) est détectée.

**4.** Méthode selon la revendication 3, dans laquelle une différence (Ref - Xm) entre ladite valeur de référence (Ref) et ladite valeur moyenne (Xm) est appelée erreur (Delta_lambda), avant de réaliser ladite troisième étape, et dans laquelle ladite valeur de référence est cartographiée sur le domaine de fonctionnement entier du moteur à combustion interne, et dans laquelle ladite troisième étape comporte la correction de ladite valeur de référence au moyen de ladite erreur pour toutes les valeurs de la valeur de référence de ladite cartographie.

**5.** Méthode selon la revendication 4, dans laquelle ledit domaine de fonctionnement du moteur à combustion interne est cartographié dans une carte 2D et dans laquelle ladite troisième étape comporte la correction de ladite valeur de référence au moyen de ladite erreur pour toutes les valeurs dans les cellules de ladite carte 2D.

**6.** Méthode selon l'une quelconque des revendications précédentes, dans laquelle ladite première procédure est réalisée pour un nombre de cycles prédéterminé et est ensuite terminée.

**7.** Méthode selon l'une quelconque des revendications précédentes 1 à 3, dans laquelle ladite troisième étape est réalisée uniquement pour une valeur de référence (Ref) correspondant auxdits états de fonctionnement stables du moteur à combustion interne.

**8.** Méthode selon l'une quelconque des revendications 4 à 6, comprenant en outre une seconde procédure comprenant les première, deuxième et troisième étapes susmentionnées, dans laquelle ladite troisième étape est réalisée uniquement pour une valeur de référence (Ref) correspondant auxdits états de fonctionnement stables du moteur à combustion interne et dans laquelle ladite seconde procédure est réalisée lorsque ladite première procédure est terminée.

**9.** Méthode selon la revendication 8, dans laquelle un domaine de fonctionnement du moteur à combustion interne est cartographié dans une carte 2D et dans laquelle, dans chaque cellule de ladite carte une valeur de référence dudit rapport air/combustible est présentée et dans laquelle une différence (Ref - Xm) entre ladite valeur de référence (Ref), avant l'exécution de ladite troisième étape, et ladite valeur moyenne (Xm) est appelée erreur (Delta_lambda), et dans laquelle ladite troisième étape comporte la correction de ladite valeur de référence d'une première cellule (C) de ladite carte 2D, auxdits états de fonctionnement stables du moteur à combustion interne.

**10.** Méthode selon la revendication 9, dans laquelle une correction est réalisée sur les cellules adjacentes à ladite première cellule en pondérant ladite erreur au moyen d'un coefficient P.

**11.** Système pour gérer une alimentation d'un moteur à combustion interne doté de

+ un système d'alimentation (J) en combustible adapté pour mesurer le combustible en réponse à des signaux d'alimentation,
+ un catalyseur (3WC) à trois voies relié à un collecteur de sortie du moteur à combustion interne,
+ un capteur lambda binaire (B), adapté pour permuter entre deux états logiques indiquant respectivement un mélange pauvre et riche, ledit capteur étant agencé immédiatement en amont dudit catalyseur (3WC),

**caractérisé en ce que** ledit système de gestion comprend une unité de traitement (ECU), configurée pour réaliser toutes les étapes selon l'une quelconque des revendications 1 à 10.

**12.** Véhicule terrestre doté de

+ un moteur (E) à combustion interne ayant un système d'alimentation (J) en combustible adapté pour mesurer le combustible en réponse à des signaux d'alimentation,
+ un catalyseur (3WC) à trois voies relié à un collecteur de sortie du moteur à combustion interne,
+ un capteur lambda binaire (B), adapté pour permuter entre deux états logiques indiquant respectivement un mélange pauvre et riche, ledit capteur étant agencé immédiatement en amont dudit catalyseur (3WC),

+ un système de gestion pour alimenter ledit moteur à combustion interne selon la revendication 11.

13. Véhicule selon la revendication 12, comprenant en outre un réservoir (S1, S2) de combustible gazeux, doté d'un capteur (L1, L2) adapté pour détecter une procédure d'alimentation dudit réservoir avec le combustible.

14. Programme d'ordinateur comprenant des moyens de codage de programme adaptés pour amener le système selon la revendication 11 à effectuer toutes les étapes selon l'une quelconque des revendications 1 à 10.

15. Moyens lisibles par ordinateur comprenant le programme d'ordinateur selon la revendication 14.

Fig. 1

Fig. 2

Fig. 3

Fig. 4

Fig. 5

Fig. 5a

Fig. 5b

**EP 3 762 598 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IT 102018000003377
- US 2008319634 A
- WO 2010097267 A
- US 4655188 A